Europäisches Patentamt

(19) European Patent Office

Office européen des brevets

(11) Numéro de publication : **0 044 834**
**B1**

(12) **FASCICULE DE BREVET EUROPÉEN**

(45) Date de publication du fascicule du brevet :
**11.04.84**

(21) Numéro de dépôt : **80901725.4**

(22) Date de dépôt : **16.09.80**

(86) Numéro de dépôt international :
**PCT/FR 80/00137**

(87) Numéro de publication internationale :
**WO WO/81008 (02.04.81 Gazettee 81/08)**

(51) Int. Cl.³ : **B 60 K   9/00**, B 60 L 11/00

(54) **GROUPE PROPULSEUR POUR VEHICULE AUTOMOBILE UTILISANT UN MOTEUR THERMIQUE ASSISTE AUX BAS REGIMES PAR UNE MACHINE ELECTRIQUE.**

(30) Priorité : **19.09.79 FR 7923343**

(43) Date de publication de la demande :
**03.02.82 Bulletin 82/05**

(45) Mention de la délivrance du brevet :
**11.04.84 Bulletin 84/15**

(84) Etats contractants désignés :
**DE GB**

(56) Documents cités :
**DE-A- 2 805 594**
**FR-A- 2 200 800**
**FR-A- 2 294 366**
**US-A- 4 021 677**
**Le dossier contient des Informations techniques présentées postérieurement au dépôt de la demande et ne figurant pas dans le présent fascicule.**

(73) Titulaire : **GUELPA, Jean**
**81, Avenue Corentin Cloarec**
**F-92270 Bois-Colombes (FR)**

(72) Inventeur : **GUELPA, Jean**
**81, Avenue Corentin Cloarec**
**F-92270 Bois-Colombes (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

Jouve, 18, rue St-Denis, 75001 Paris, France

# Groupe propulseur pour véhicule automobile utilisant un moteur thermique assisté aux bas régimes par une machine électrique

L'invention concerne la propulsion des véhicules automobiles ou similaires.

On sait que dans la circulation automobile urbaine le rendement énergétique moyen des moteurs et en particulier des moteurs à explosion est très mauvais, et ceci principalement pour trois raisons, la première étant liée aux fréquents arrêts où le moteur tourne au ralenti pour un travail utile nul, la seconde étant liée aux nombreuses décélérations où le moteur consomme encore plus pour un travail négatif, et la troisième étant liée aux nombreuses accélérations et aux paliers sur des supports courts où le moteur tourne relativement vite avec des couples réduits ou très réduits, donc à des régimes où la consommation spécifique est élevée pour un travail utile faible.

Au sujet de la première raison on rappelle que la consommation au ralenti est en gros proportionnelle à la cylindrée du moteur, à son régime de ralenti, et à la richesse du mélange. Or, un ralenti très lent exigerait du fait de l'irrégularité du couple moteur, un volant de très grande inertie, qui serait par suite préjudiciable au rendement aux régimes moyens et élevés. D'autre part, les mélanges pauvres qui permettent de faibles consommation et pollution, n'assurent un fonctionnement correct, que lorsque le moteur est chaud. Lors des nombreux départs à froid il faut donc laisser le « starter » plus ou moins longtemps, ce qui dans la pratique contribue à détériorer les résultats optimistes obtenus en homologation et annoncés par les constructeurs.

Au sujet de la deuxième raison, on sait que la consommation en décélération est proportionnelle à celle du ralenti et à la dépression, qui elle-même augmente avec le régime du moteur. On a donc les mêmes inconvénients que ci-dessus et même amplifiés.

Au sujet de la troisième raison, on sait que dans la circulation urbaine des rapports trop courts (par rapport à ceux qui seraient suffisants) sont imposés par plusieurs facteurs: la nécessité pratique où l'on est, de souvent garder une certaine réserve d'accélération pour des raisons de sécurité; l'allure des caractéristiques couple-régime, qui présentent aux bas régimes, une pente favorisant l'instabilité, par le fait qu'une augmentation du couple résistant, entraîne une diminution de régime, qui provoque à son tour une diminution du couple moteur ; aux très bas régimes, l'irrégularité du couple moteur, qui aggrave l'inconvénient précédent ; enfin, la tendance contemporaine à utiliser des moteurs de faible cylindrée et de régimes maximum élevés, pour lesquels l'important retard à la fermeture de l'admission, diminue aux bas régimes la cylindrée admise, donc le couple moteur.

A côté de ces moteurs classiques, on connaît également, notamment d'après le brevet FR-A-2 200 800, des groupes propulseurs encore assistés, dits « hybrides », qui comportent un moteur thermique de puissance réduite couplé à une machine électrique réversible coopérant avec un accumulateur, de telle manière que lorsque la puissance de ce moteur est excédentaire, la machine électrique récupère l'énergie excédentaire et charge l'accumulateur, tandis que dans les périodes où la puissance du moteur s'avère insuffisante, la machine électrique fonctionne en moteur et assiste le moteur thermique en déchargeant la batterie. De tels groupes supposent donc que la machine électrique ait une puissance du même ordre de grandeur que celle du moteur thermique et que l'accumulateur ait une capacité considérable pour assurer cette puissance pendant une durée de quelques minutes à quelques dizaines de minute. De tels groupes sont par suite extrêmement lourds et onéreux.

Enfin, on connaît d'après le brevet FR-A-2 294 366 l'utilisation à bord des véhicules à moteur thermique d'un variateur de vitesse continu reliant l'arbre moteur à celui d'un auxiliaire du moteur, par exemple d'une dynamo ou d'un alternateur, ce variateur étant asservi de manière à maintenir la vitesse de cet auxiliaire dans une plage de régimes plus réduite. Dans ce cas le paramètre de la régulation est généralement la vitesse de l'arbre de l'auxiliaire commandé, et c'est ce paramètre qui commande la variation du rapport variable de multiplication dans le sens qui s'oppose à la variation de ce paramètre.

Le but de l'invention est de réaliser un groupe propulseur pour véhicule qui diminue les inconvénients précédents, tant des moteurs thermiques classiques que des groupes assistés, en permettant d'utiliser un moteur thermique jusqu'à des régimes extrêmement bas.

Pour cela l'invention utilise un moteur thermique habituel et de puissance habituelle pour le véhicule considéré avec son volant d'inertie habituel, éventuellement réduit, une machine électrique réversible sensiblement de la puissance habituelle, c'est-à-dire celle nécessaire pour la charge de l'accumulateur et le démarrage du groupe propulseur, un accumulateur électrique sensiblement de la capacité habituelle, ainsi qu'un variateur de vitesse reliant la machine électrique au moteur thermique et un circuit électrique de commande ; mais l'invention comporte trois caractéristiques essentielles :

La première est que son circuit électrique de commande est agencé pour assurer le fonctionnement du moteur thermique à des régimes très inférieurs à ceux auxquels son volant d'inertie lui permettrait normalement de fonctionner, et cela, en régularisant son couple moteur par échanges instantanés alternativement positif et négatif d'énergie mécanique entre le moteur thermique et la machine électrique et d'énergie électrique entre la machine électrique et l'accumulateur, principalement à l'intérieur d'un même cycle du moteur thermique, mais avec des puissances efficaces moyennes cédées ou reçues par la machine électrique et l'accumulateur qui restent nulles ou relativement très faibles par rapport à la puissance maximum du moteur thermique.

La seconde, est que contrairement aux systèmes hybrides habituels où les échanges d'énergie efficace entre la machine électrique et le moteur thermique, sont permanents, le circuit électrique est en outre agencé, pour que ces échanges, évidemment limités en puissance à celle de pointe de la machine et de la batterie, soient limités en temps, aux seules périodes de variation de vitesse, et pendant quelques secondes au plus.

La troisième caractéristique essentielle est que le variateur de vitesse a son rapport de démultiplication variable commandé par un dispositif approprié en fonction de la vitesse mesurée sur l'arbre du moteur thermique ou sur un arbre à vitesse proportionnelle et non sur l'arbre de la machine électrique et est agencé pour transmettre un couple important, moteur et résistant, aux bas régimes quand la démultiplication est maxima, mais décroissant rapidement avec cette dernière quand les régimes croissent de façon à transmettre aux régimes moyens et élevés, un couple beaucoup plus faible avec un meilleur rendement.

D'autres particularités de l'invention apparaîtront dans la description qui va suivre d'un mode de réalisation pris comme exemple et représenté sur le dessin annexé, sur lequel :

la figure 1 représente schématiquement en coupe le variateur de vitesse ;

la figure 2 représente en vue de face un fragment du diaphragme régulateur ;

la figure 3 est le schéma électrique du dispositif.

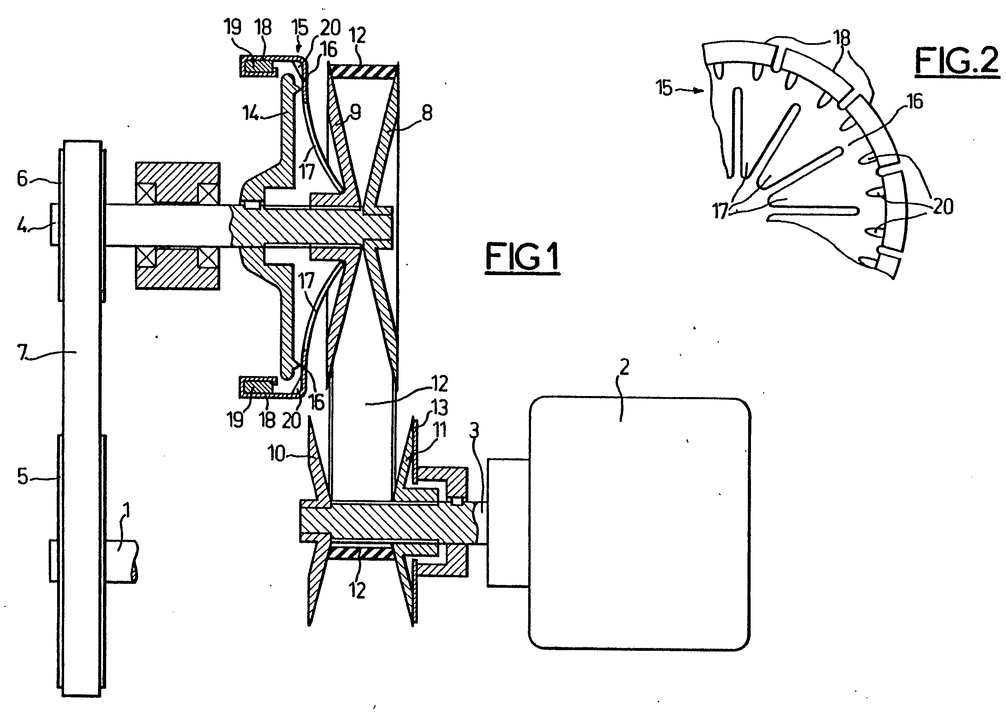

Le groupe propulseur selon l'invention comporte avant tout un moteur thermique de type et de puissance habituels avec son volant d'inertie de dimension habituelle, éventuellement réduit, et également sa boîte de vitesses et sa transmission pour entraîner les roues du véhicule. Ces divers organes n'ont pas été représentés sur la fig. 1, où seule l'extrémité 1 du vilebrequin a été représentée. Le groupe comporte d'autre part un accumulateur électrique non représenté, sensiblement de capacité usuelle, et une machine électrique réversible 2, d'une puissance compatible avec la charge de cet accumulateur et le démarrage du moteur, ou d'une puissance à peine supérieure, mais de toute façon très inférieure à celle du moteur thermique.

En effet, conformément à l'invention les transferts d'énergie mécanique entre l'arbre 1 et la machine électrique 2, et d'énergie électrique entre cette machine et l'accumulateur, n'ont pas pour but principal de pallier le manque de puissance du moteur et de s'étaler par conséquent sur des périodes de temps appréciables, mais seulement de pallier aux très bas régimes du moteur l'insuffisance d'inertie de son volant d'inertie, et par conséquent à ces très bas régimes, jusqu'au tiers environ du régime de ralenti usuel, ces échanges d'énergie positive et négative se font alternativement à l'intérieur d'un même cycle, c'est-à-dire entre les diverses explosions que comporte le cycle du moteur.

Pour cela la machine électrique 2 est entraînée par l'arbre 1 par l'intermédiaire d'un variateur de vitesse continu qui, conformément à l'invention, comporte trois caractéristiques particulières. La première est que le paramètre de régulation du rapport de transmission, est la vitesse de l'arbre 1, ou une vitesse qui lui est proportionnelle, et non pas celle de l'arbre 3 de la machine électrique 2 ; la deuxième, est que le couple transmis par le variateur, doit être extrêmement élevé pour les bas régimes du moteur, au moment où ces échanges d'énergie régulateurs sont particulièrement importants, et décroître graduellement vers les régimes moyens lorsque ce rôle devient secondaire puis inutile.

La troisième caractéristique, déjà connue dans certains variateurs, mais utilisée à l'inverse du sens habituel, et en combinaison avec les deux premières, est qu'à l'arrêt du groupe propulseur le variateur revient automatiquement en position de démultiplication maxima, condition nécessaire au redémarrage ultérieur du groupe.

Pour cela on peut utiliser n'importe quel type de variateur, mais en particulier le plus simple et le plus couramment utilisé, c'est-à-dire le variateur à courroie trapézoïdale avec poulies à flasques coniques écartables comme dans l'exemple de réalisation représenté sur la fig. 1.

Le moteur thermique est supposé par exemple avoir un régime maximum à 6 000 tr/mn et l'invention se propose d'abaisser son régime de ralenti aux environs de 300 tr/mn au lieu des 900 tr/mn habituels. En outre, le but n'est pas seulement d'abaisser le régime de ralenti mais d'utiliser effectivement à la traction les bas régimes qui suivent ce régime de ralenti.

Le variateur de vitesse peut être établi directement entre l'arbre moteur 1 et l'arbre de la machine électrique 3, mais il est préférable, pour un dimensionnement plus économique de la machine électrique 2, d'utiliser un premier étage de multiplication entre l'arbre 1 et un arbre intermédiaire 4 avec un rapport de multiplication d'environ 2 obtenu par exemple par deux poulies 5 et 6 et une courroie crantée 7. L'arbre 4 tourne donc à des régimes variant de 600 tr/mn à 12 000 tr/mn.

Le variateur proprement dit comporte d'une manière connue une première poulie à flasques coniques dont un des flasques 8 est calé en bout de l'arbre 4 et dont l'autre flasque 9 est claveté coulissant sur cet arbre, et une deuxième poulie constituée également par un flasque fixe 10 calé en bout de l'arbre 3 de la machine électrique 2 et un flasque mobile 11 claveté coulissant sur cet axe. Une courroie trapézoïdale 12 de type habituel, renvoyée sur ces poulies assure la transmission. Les diamètres des deux poulies du variateur sont choisis de manière que les rapports de démultiplication, c'est-à-dire les rapports de vitesse entre l'arbre 3 et l'arbre 4, varient d'une valeur voisine de 4 dans le cas représenté sur la figure à une valeur voisine de 0,66, soit une plage de variation d'environ 6. La régulation de cette variation se trouve étalée sur des régimes du moteur de 300 tr/mn jusqu'à 1 800 tr/mn, soit 30 % environ du régime maximum du moteur.

Lorsque le moteur tourne aux environs de 300 tr/mn, il est donc nécessaire que la courroie 12 et les deux poulies extensibles transmettent un couple mécanique important, d'une part, pour assurer la transmission du couple alternativement positif et négatif fourni par voie électrique sur la machine électrique 2, et d'autre part, pour transmettre les effets d'inertie du rotor de cette machine électrique qui se trouvent en quelque sorte multipliés par la transmission et s'ajoutent à celle du volant d'inertie propre du moteur. Au contraire, lorsque le régime moteur monte graduellement de 300 à 1 800 tr/mn, le couple à transmettre décroît très rapidement, puisque le moteur n'a plus besoin de cette assistance, et que la machine électrique n'a à recevoir que la puissance mécanique nécessaire à son entraînement continu, et non plus alternatif, et correspondant à sa puissance électrique.

Pour réaliser cette rapide variation on utilise conformément à l'invention un ressort 13, par exemple un ressort à diaphragme, exerçant un effort de rappel du flasque mobile 11 en direction du flasque fixe 10, ce ressort étant d'une part d'une rigidité importante pour que l'effort transmis dans la position représentée sur la fig. 1 soit important, et d'autre part d'une flexibilité relativement réduite pour que cet effort décroisse très rapidement au fur et à mesure que le ressort se détend. Ceci est tout à fait inhabituel sur ce type de variateur où l'on utilise généralement sur la poulie dont l'extension n'est pas commandée un ressort aussi flexible que possible pour exercer un effort aussi constant que possible.

En outre, selon une autre caractéristique de l'invention, le paramètre de la régulation n'est pas la vitesse de l'arbre mené 3 mais celle de l'arbre intermédiaire 4, proportionnelle à la vitesse du moteur et commandant le déplacement du flasque mobile 9 de la première poulie extensible. Cette commande de régulation peut être assurée par tout moyen habituel électrique, mécanique, hydraulique ou à dépression, mais elle peut en particulier être réalisée directement par voie centrifuge à l'aide du dispositif représenté sur la fig. 1.

Dans ce dispositif, on utilise un contre-flasque fixe 14 calé sur l'arbre 4 en regard du flasque mobile 9 et un ressort à diaphragme 15 prenant appui sur ce contre-flasque 14, par exemple à la périphérie de celui-ci, et poussant le moyeu du flasque 9 en direction du flasque 8. Ce ressort à diaphragme, dont on voit un fragment sur la fig. 2, comporte une partie annulaire continue 16 et des doigts 17 disposés radialement vers l'intérieur, la raideur de l'ensemble étant déterminée de telle manière que l'effort exercé sur le flasque 9, et par son intermédiaire sur la courroie 12 et par contre coup sur le flasque 11 et sur le diaphragme 13, soit prépondérant c'est-à-dire place au repos l'ensemble dans l'état représenté sur la fig. 1. En outre, ce diaphragme 15 comporte des parties segmentées 18 réparties sensiblement selon une surface cylindrique et lestées chacune d'une masselotte 19, chacune des parties segmentées étant réunie rigidement par des goussets emboutis 20 à la partie annulaire continue 16. De cette manière, lorsque la vitesse de l'arbre 4 augmente, la force centrifuge s'exerçant sur les parties lestées 18 a pour effet de communiquer un mouvement de torsion à la partie annulaire continue 16 qui vient de ce fait réduire la poussée des doigts élastiques 17.

L'ensemble en effet n'a pas besoin d'une extrême précision et il suffit que les ressorts 13 et 15 soient réglés de manière que le rapport de démultiplication 4 soit conservé pendant le démarrage et jusqu'au régime de 300 t/mn sur l'arbre 1, soit un régime de 2 400 tr/mn sur l'arbre 3, et que par ailleurs, lorsque le régime moteur augmente graduellement jusqu'à 1 800 tr/mn environ (soit 3 600 tr sur l'arbre 4) le variateur passe progressivement au rapport 0,66 ce qui conduit toujours à 2 400 tr/mn pour l'arbre 3.

A ce moment le variateur est à fond de course et l'augmentation ultérieure du régime du moteur de 1 800 à 6 000 tr/mn produit donc une augmentation proportionnelle du régime de la machine tournante qui passe de 2 400 à 8 000 tr/mn.

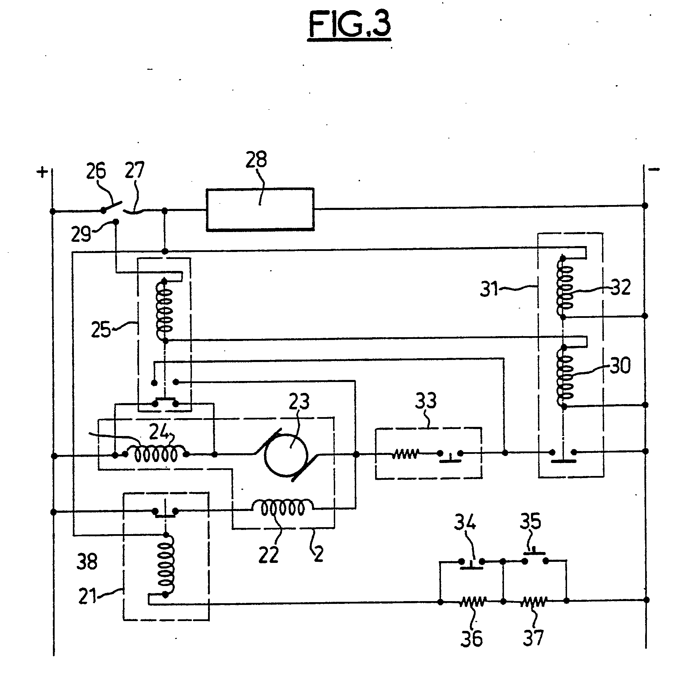

Pour cette raison, on voit sur la fig. 3 que l'on conserve dans le schéma électrique le régulateur de tension habituel 21 qui commande l'excitation « shunt » 22 de la machine tournante 2 dont on voit en 23 l'induit.

Cette machine électrique 2 comporte de préférence un deuxième enroulement 24 d'excitation de type série qui est normalement court-circuité par le contact de repos d'un relais 25. Ceci permet d'utiliser la machine électrique comme démarreur selon une technique connue. Pour cela le contact d'allumage à clé 26 comporte un premier contact 27, susceptible d'être établi de manière permanente, et alimentant électriquement le dispositif d'allumage 28 du moteur, et un deuxième contact 29, susceptible de n'être établi que d'une manière temporaire, en étant rappelé vers la position précédente par un ressort de rappel non représenté, ceci pour permettre le démarrage à l'aide de la clé de contact d'une manière connue. Ce contact 29, au lieu d'alimenter le démarreur ou le solénoïde habituel, commande le relais 25, et en série ou en parallèle avec celui-ci, l'enroulement principal 30 d'un deuxième relais 31 dont le contact de travail ferme le circuit d'alimentation de la machine électrique 2. Ce deuxième relais 31 comporte d'autre part un enroulement de maintien 32 alimenté sur le circuit de l'allumage 27.

L'actionnement de la clé en position démarrage 29 a donc pour effet de supprimer le shuntage de l'enroulement série 24 et d'autre part d'alimenter l'induit 23 ainsi que ses inducteurs série 24 et shunt 22 ce qui permet à la machine de démarrer avec une caractéristique « compound » pour décoller et lancer le moteur. Une fois que le moteur est lancé et que le contact à clé 26 se trouve ramené en position 27, le bobinage de maintien 32 continue à maintenir en circuit l'induit 23 et l'inducteur shunt 22 pour assurer la fonction régulatrice à l'intérieur du cycle, tandis que l'inducteur série 24 se trouve shunté à nouveau. Un relai thermique de sécurité 33 est prévu, pour protéger la machine 2 et l'accumulateur électrique, en cas de surcharge accidentelle provenant soit de fausse manœuvre, clé de contact relâchée trop tôt par exemple, soit d'incidents tels que panne d'allumage, ou de carburation. Ce relais est lui-même shunté par un contact de travail du relais 25 pour permettre le fonctionnement en démarreur sans disjoncter.

Les caractéristiques du moteur et du variateur de la fig. 1 ainsi que les caractéristiques électriques de la machine électrique 2 sont choisies et réglées de manière que lorsque le moteur est chaud, il ait un ralenti d'environ 300 tr/mn et qu'à ce régime la machine électrique 2 tourne à un régime de 2 400 tr/mn comme on l'a vu et produise une légère charge de la batterie. Au contraire, lorsque le moteur est froid, il peut en résulter une décharge de la batterie utilisée par la machine électrique pour assister momentanément le moteur.

Enfin, en 36-37 est figuré schématiquement un dispositif d'aide instantanée au moteur thermique en accélération et décélération. La commande, non représentée, est par exemple du type connu « tiroir à huile » est actionnée par la pédale d'accélérateur. Un mouvement lent de cette pédale est sans effet. Un mouvement rapide écarte cette commande de sa position de repos, dans un sens ou dans l'autre, pour un temps, de l'ordre de quelques secondes proportionnel à l'amplitude et la rapidité du mouvement. La commande ferme, dans le sens décélération, un premier contact 34 ouvert au repos, ou ouvre dans le sens accélération un deuxième contact 35 fermé au repos. Ces contacts shuntent respectivement deux résistances 36 et 37, placées en série dans le circuit du bobinage de tension 38, du régulateur de champ 21 de la machine électrique 2. Au repos, seule la résistance 37 est donc en service. Pour un mouvement rapide de l'accélérateur on a soit une réduction soit une augmentation de la résistance totale et par suite une modification de la régulation de tension dans un sens qui permet lors de l'accélération de faire fonctionner la machine électrique en assistance du moteur, et en décélération de la faire fonctionner en récupérateur d'énergie. Etant donné que la puissance de la machine est beaucoup plus faible que celle du moteur thermique, cette assistance ne joue évidemment qu'un rôle négligeable aux régimes normaux du moteur, mais devient très appréciable dans les bas régimes de 300 à 1 800 tr/mn où elle agit dans le sens d'une correction de la pente de la courbe caractéristique, source d'instabilité comme on l'a vu plus haut. En effet, un rôle très appréciable peut être obtenu dans ce domaine, même avec des puissances de 1 à 2 kW pour la machine électrique 2, pour une puissance de 30 à 50 kW pour le moteur.

On voit donc en définitive que le groupe propulseur selon l'invention, qui n'utilise qu'un moteur thermique, une machine électrique, et un accumulateur électrique de puissances usuelles, et par ailleurs un variateur de vitesse automatique extrêmement simple et des organes électriques également très réduits, permet de réduire considérablement la consommation et la pollution notamment dans la circulation en ville, et même d'accroître légèrement les performances.

**Revendications**

1. Groupe propulseur pour véhicule automobile comportant un moteur thermique à cycle de fonctionnement alternatif entraînant les roues avec son volant d'inertie habituel, une machine électrique (2) réversible, un accumulateur électrique, un variateur de vitesse reliant la machine électrique au moteur thermique pour produire un couple résultant, et un circuit électrique de commande, caractérisé par le fait :

que ledit circuit électrique est agencé pour assurer le fonctionnement dudit moteur thermique, à des régimes très inférieurs à ceux auxquels son volant d'inertie lui permettrait normalement de fonctionner, en régularisant son couple moteur, par échanges instantanés alternativement positifs et négatifs, d'énergie mécanique, entre le moteur thermique et la machine électrique, et d'énergie électrique entre la machine électrique et l'accumulateur, principalement à l'intérieur d'un même cycle du moteur thermique, mais avec des puissances efficaces moyennes cédées ou reçues par la machine électrique et l'accumulateur, qui restent nulles ou relativement très faibles par rapport à la puissance maximum du moteur thermique, que ledit circuit électrique comporte un autre agencement, permettant, entre le moteur thermique d'une part, la machine électrique et l'accumulateur d'autre part, des échanges d'énergie efficace notables, mais seulement pendant les périodes d'accélération ou de décélération, et pendant des durées inférieures à quelques secondes,

et que ledit variateur à son rapport de démultiplication variable commandé automatiquement par un dispositif approprié en fonction de la vitesse mesurée sur l'arbre du moteur thermique ou sur un arbre à vitesse proportionnelle, et est agencé pour transmettre un couple important, moteur et résistant, aux bas régimes quand la démultiplication est maxima, mais décroissant rapidement avec cette dernière quand les régimes croissent de façon à transmettre aux régimes moyens et élevés un couple beaucoup plus faible avec un meilleur rendement.

2. Groupe propulseur selon la revendication 1, caractérisé par le fait que le variateur est en position de repos dans la position correspondant à la démultiplication maxima, et revient automatiquement à cette position à l'arrêt du groupe propulseur.

3. Groupe propulseur selon la revendication 2, dans lequel le variateur est du type comportant une courroie trapézoïdale montée entre deux poulies à flasques coniques écartables dont une au moins est actionnée par un ressort rappelant les flasques l'un vers l'autre.

4. Groupe propulseur selon l'une quelconque des revendications 2 et 3, caractérisé par le fait que son autre poulie située du côté du moteur thermique comporte un deuxième ressort plus puissant que le ressort de la première poulie, et qu'elle comporte un dispositif de masses centrifuges agissant dans le sens qui réduit l'action de ce deuxième ressort.

5. Groupe propulseur selon l'une quelconque des revendications précédentes, dans lequel la machine électrique est du type compound avec une excitation série et une excitation parallèle régulée, et qui comporte une commande par contact à clef possédant un contact d'allumage et un contact temporaire de démarrage,

caractérisé par le fait que ledit circuit électrique comporte un premier relais dont le contact de repos shunte ladite excitation série et dont le bobinage est alimenté par ledit contact temporaire de démarrage, et un deuxième relais dont le contact de travail alimente la machine électrique ce deuxième relais possédant un bobinage d'excitation raccordé sur le contact de démarrage, en série ou en parallèle avec le bobinage précédent, et un bobinage de maintien raccordé sur ledit contact d'allumage.

6. Groupe propulseur selon la revendication 5, dans lequel le circuit électrique comporte également un relais thermique de sécurité sur le circuit d'alimentation de la machine électrique, caractérisé par le fait que ledit premier relais comporte en outre un contact de travail qui shunte ledit relais thermique de sécurité.

7. Groupe propulseur selon la revendication 5, dans lequel le circuit électrique comporte en outre dans le circuit de régulation de l'excitation parallèle, deux résistances additionnelles, shuntées par deux contacts, eux-mêmes actionnés par un dispositif sensible aux mouvements rapides de la pédale d'accélérateur.

**Claims**

1. A propulsion unit for motor vehicle comprising a heat engine with a reciprocating operating cycle driving the wheels with its usual flywheel, a reversible electric machine (2), an electric accumulator, a variable speed system connecting the electric machine to the heat engine to produce a resultant torque and an electric control circuit, characterized in that :

the said electric circuit is designed to assure operation of the said heat engine at much lower engine speeds than those which its flywheel would normally allow it to function at, by controlling its engine torque, through alternately positive and negative instantaneous exchanges of mechanical energy between the heat engine and the electrical machine and of electrical energy between the electrical machine and the accumulator, mainly within the same cycle of the heat engine but with mean effective powers given up or taken up by the electric machine and the accumulator which remain zero or relatively very low compared with the maximum power of the heat engine, in that the electrical circuit comprises an arrangement which makes significant effective energy exchanges possible between the heat engine on the one hand and the electric machine and accumulator on the other, but only during periods of acceleration or deceleration and for time spans of less than a few seconds, and in that the said variable speed system has its variable demultiplication ratio controlled automatically by a suitable device according to the speed measured on the heat engine shaft or on a shaft with proportional speed, and is arranged to transmit a considerable torque, both driving and resistive, at low engine speeds when the demultiplication is a maximum, but rapidly decreasing with the latter when the speeds rise so as to transmit a much lower torque with greater efficiency at medium and high engine speeds.

2. The propulsion unit according to claim 1, characterized in that the variable speed system is in the idle position corresponding to the maximum demultiplication and returns automatically to this position when the propulsion unit stops.

3. The propulsion unit according to claim 2, in which the variable speed device is of the type comprising a V-belt mounted between two pulleys with separable conical side discs, at least one of which is operated by a spring returning the discs towards each other.

4. The propulsion unit according to either of claims 2 and 3, characterized in that its other pulley located on the heat engine side comprises a second spring more powerful than the spring of the first pulley, and in that it comprises a system of centrifugal weights acting in a direction which reduces the effect of this second spring.

5. The propulsion unit according to any of the preceding claims, in which the electric machine is of the compound type with series excitation and regulated shunt excitation and which comprises a key contact control possessing an ignition contact and a temporary starting contact,

characterized in that the said electric circuit comprises a first relay the resting contact of which shunts the said series excitation and the winding of which is fed by the temporary starting contact, and a second relay the working contact of which feeds the electric machine, with this second relay possessing an energizing coil connected to the starting contact, in series or in parallel with the previous winding and a holding winding connected to the said ignition contact.

6. The propulsion unit according to claim 5, in which the electric circuit also comprises a thermal safety relay on the electric machine power supply circuit,

characterized in that the said first relay also comprises a working contact which shunts the said thermal safety relay.

7. The propulsion unit according to claim 5, in which the electric circuit also comprises in the shunt excitation regulation circuit two additional resistors, shunted by two contacts, themselves operated by a device which is sensitive to rapid movements of the accelerator pedal.

**Ansprüche**

1. Antriebseinheit für Kraftfahrzeuge, die beinhaltet : Einem thermischen Motor mit alternativem Arbeitsspiel, der die Räder mit seinem üblichen Schwungrad antreibt, eine umkehrbare elektrische Maschine (2), einen elektrischen Akkumulator, einen Drehzahlregler, der die elektrische Maschine mit dem thermischen Motor verbindet um ein resultierendes Drehmoment zu erzeugen, und einen Steuerstromkreis, dadurch gekennzeichnet,

daß der genannte Stromkreis so angeordnet ist, daß er das Arbeiten des genannten Motors bei sehr viel geringeren Drehzahlen sicherstellt als es sein Schwungrad normalerweise zulassen würde, indem er sein Antriebsmoment durch alternative augenblickliche positive und negative Austauschvorgänge der mechanischen Energie zwischen dem thermischen Motor und der elektrischen Maschine, und der elektrischen Energie zwischen der elektrischen Maschine und dem Akkumulator regelt, hauptsächlich innerhalb des selben Zyklus des thermischen Motors, jedoch mit von der elektrischen Maschine und dem Akkumulator abgegebenen bzw. aufgenommenen mittleren tatsächlichen Leistungen, die null oder verhältnismäßig sehr schwach im Vergleich zur Höchstleistung des thermischen Motors bleiben, daß der genannte elektrische Motor eine andere Anordnung umfaßt, die Austauschvorgänge bemerkenswerter Leistungsenergien zwischen dem thermischen Motor einerseits und der elektrischen Maschine und dem Akkumulator andererseits, jedoch nur während der Beschleunigungs- oder Verzögerungsperioden und während Zeiträumen, die kürzer als ein paar Sekunden sind, ermöglicht.

und daß der genannte Regler in seinem variablen Untersetzungsverhältnis durch eine geeignete Vorrichtung in Abhängigkeit von der an der Welle des thermischen Motors oder an einer Welle mit proportionaler Drehzahl gemessenen Geschwindigkeit automatisch gesteuert wird und angeordnet ist, um ein großes Antriebs- und Lastmoment zu übertragen und zwar bei niedrigen Drehzahlen wenn die Untersetzung maximal ist, jedoch mit dieser letzteren schnell abfallend wenn die Drehzahlen ansteigen, so daß bei mittleren und hohen Drehzahlen ein sehr viel schwächeres Drehmoment mit höherem Wirkungsgrad übertragen wird.

2. Antriebseinheit gemäß Anspruch 1, dadurch gekennzeichnet, daß der Regler in der Stellung, die der größten Untersetzung entspricht, in Ruhestellung steht und beim Stehenbleiben der Antriebseinheit selbsttätig in diese Stellung zurückkehrt.

3. Antriebseinheit gemäß Anspruch 2, bei dem der Regler von einem Typ ist, der einen Keilriemen zwischen zwei auseinanderrückbaren Riemenscheiben mit konischen Flanschen hat, von denen wenigstens eine unter dem Zug einer Feder steht, die die Flansche zueinander rückstellt.

4. Antriebseinheit gemäß einem beliebigen der Ansprüche 2 und 3, dadurch gekennzeichnet, daß seine andere Riemenscheibe, die am thermischen Motor sitzt, eine zweite, stärkere Feder als die Feder der ersten Riemenscheibe hat, und daß sie eine Vorrichtung mit Schwungmassen hat, die in einer Richtung wirkt, die die Wirkung dieser zweiten Feder reduziert.

5. Antriebseinheit, gemäß einem beliebigen der vorstehenden Ansprüche, in dem die elektrische Maschine vom Verbunderregungstyp mit einer Reihenschlußerregung und mit einer geregelten Parallelschlußerregung ist und über einen Schlüsselschalter mit einem Zündkontakt und einem kurzzeitigen Anlaßkontakt betätigt wird,

dadurch gekennzeichnet, daß der genannte Stromkreis ein erstes Relais, dessen Ruhekontakt die genannte Reihenschlußerregung überbrückt und dessen Wicklung über den genannten kurzzeitigen Anlaßkontakt gespeist wird, sowie ein zweites Relais, dessen Arbeitskontakt die elektrische Maschine speist, umfaßt, wobei dieses zweite Relais eine Erregerwicklung, die über den Anlaßkontakt in Reihe bzw. parallel mit der obigen Wicklung verbunden ist, und eine Haltespule, die an dem genannten Zündkontakt liegt, besitzt.

6. Antriebseinheit gemäß Anspruch 5, in dem der Stromkreis auch ein thermisches Sicherheitsrelais im Stromversorgungskreis der elektrischen Maschine enthält,

dadurch gekennzeichnet, daß das genannte erste Relais ferner einen Arbeitskontakt enthält, der das genannte thermische Sicherheitsreleis überbrückt.

7. Antriebseinheit gemäß Anspruch 5, in dem der Stromkreis ferner im Regelkreis der Parallelerregung zwei Zusatzwiderstände enthält, die mit zwei Kontakten überbrückt sind, die ihrerseits von einer Vorrichtung betätigt werden, die auf schnelle Bewegungen des Gaspedals anspricht.

FIG.2

FIG 1

0 044 834

# FIG.3